# EUROPEAN PATENT APPLICATION

(11) **EP 0 822 644 A1**
(43) Date of publication of application: **04.02.1998**
(21) Application number: 96202161.4
(22) Date of filing: 31.07.1996
(51) Int. Cl.: H02K 49/10

(54) **Magnetic power transmission device and systems comprising such magnetic power transmission device**

(71) Applicant: Multiple Energy Research Ltd., Road Town, Tortola (VG)
(72) Inventor: Schrötter, Johannes, 94032 Passau (DE)
(74) Representative: de Bruijn, Leendert C.

(57) **Abstract**

Magnetic power transmission device, having at least a first body (3) rotatably mounted about a first axis of rotation and a second body (4) rotatably mounted about a second axis of rotation, said first body having an outer surface and being provided with at least a first magnetic spiral (1) with magnetic poles oriented outwards from said outer surface and said second body being provided with at least a second magnetic spiral (2), said first and second magnetic spirals facing another in order to exert a magnetic force to another, said second body being provided with a cavity defining an inner surface of said second body, said first body being, at least partly, arranged within said cavity, magnetic poles of said second magnetic spiral being oriented inwards from said inner surface of said second body into the cavity.

## Description

The invention relates to a power transmission device according to the pre-amble of Claim 1.

Magnetic power transmission devices are known with which a drive force is transmitted from one body rotatably mounted in bearings to another body rotatably mounted in bearings. The bodies are arranged axially parallel to one another and alongside one another and the power transmission takes place by virtue of the magnetic effect in the same way as gear wheels which mesh with one another and form a transmission. The problem with these known power transmission devices is that the transmission losses increase as the magnitude of the power to be transmitted increases. On the other hand, magnetic power transmission devices are superior to mechanical power transmission devices in respect of the freedom from wear or low degree of wear.

Furthermore, it is known to use magnetic forces for the provision of magnetic couplings. With appropriate design, couplings of this type can be constructed such that they have comparatively little play, and, by the implementation of electromagnets, ensure a variable coupling function without mechanical adjustment movements. The activation of the electromagnets demands a corresponding consumption of energy. Nevertheless, couplings of this type are employed if the low degree of wear, but also the balancing out of vibrations and the like are relevant.

Magnetic stirrers, for example, with which poor efficiency can be justified by the mechanical decoupling, operate in accordance with the principle of magnetic couplings.

Therefore, as a rule, mechanical transmissions in which the active surfaces have been machined with high precision are used for the provision of power transmission devices which have the lowest possible losses. Efficiencies of around 99 % are achievable in this way. However, high quality transmissions of this type demand continuous monitoring in respect of lubrication, bearing play and, where appropriate, wear in order to maintain their high efficiency.

FR-A 1 589 173 discloses a magnetic power transmission device with which two cylindrical bodies adjacent to one another have magnetic spirals in the peripheral region. In this device north poles and, respectively, south poles are formed on the relevant cylinders, the adjacent cylinders being so arranged that the south pole of one cylinder is located opposite a north pole of another cylinder.

EP-A-0.681.757 discloses a magnetic power transmission device having at least two essentially cylindrical bodies, which are rotatably mounted in bearings adjacent to one another. Magnetic spirals are arranged on the outer surfaces of the cylindrical bodies and are facing one another in the peripheral region of the adjacent cylinders in such a way that identical poles are oriented towards the outside, so that there is a repulsion effect between the cylinders.

Based on the power transmission devices previously disclosed, the objective is further to develop a device of this type in such a way that it has improved torque characteristics and is, thus, able to transmit higher powers than the transmission devices according to the prior art.

This objective is achieved according to the invention by a magnetic power transmission device as defined in the preamble of claim 1 which is characterised in that, the second body is provided with a cavity defining an inner surface of the second body, the first body being, at least partly, arranged within the cavity, magnetic poles of the second magnetic spiral being oriented inwards from the inner surface of the second body into the cavity.

By the application of such spirals, one surrounding the other, the system torque is drastically increased: computer simulation has shown a torque increase of about 48 times the torque of the system according to figure 1 of EP-A-0.681.757.

Advantageous further developments result from the sub-claims.

Preferably, the outer surface of the first body and the inner surface of the second body are essentially cylindrically shaped.

Moreover, it is preferred that the first axis of rotation coincides with the second axis of rotation.

In one embodiment the first body is made of magnetically conducting material. Also, the second body may be made of magnetically conducting material. By applying this feature, the system torque may be increased by a factor several times as large as a system without this feature.

In the magnetic power transmission device according to the invention it is particularly advantageous that the magnetic spirals according to the invention operate somewhat offset with respect to one another and have a shape which at least approximates an ideal spiral.

If identical poles of the bodies surrounding one another are each oriented towards another, the identical poles opposite one another repel one another. Gliding of the magnetic spirals past one another takes place, in which context it is essential that the fields of the permanent magnets opposite one another do not transect, but enter into one another and move away from one another in practice along the direction of the field lines. Field lines are not cut and no eddy currents are created.

In the case of the magnetic power transmission device according to the invention the extremely high efficiency in the case of appropriate design, which efficiency is in practice determined by the bearing friction, is particularly advantageous, the power transmission device according to the invention also being suitable for operation in a vacuum. In the case of operation under atmospheric pressure, it is preferable that each body is precisely cylindrical, in order to keep air resistance as low as possible.

According to the invention it is also possible to transmit drive forces with very high revolutions using the power transmission device. The reason for this is that the pure power transmission takes place with extremely low losses or, considered from practical standpoints, loss-free.

It is also particularly advantageous if the effective width of the magnetic tracks is considerably less than the spacing between the magnetic tracks in the axial direction, that is to say the pitch in the case of single helix spirals or half the pitch in the case of double helix spirals. This prevents the magnetic tracks adjacent to one another from influencing one another. At the same time, a corresponding play is obtained in power transmission, which, according to the invention, is desired for further reduction of losses. The commencement of power transmission is smooth, that is to say with slowly increasing counter-force, there nevertheless being no slippage, even in the case of a small pitch, because of the highly efficient magnetic elements.

The magnetic elements are preferably small and arranged in a row, so that they form an essentially uniform magnetic track oriented towards the outside. The power transmission between magnetic spirals obliquely opposite one another takes place in such a way that the rounded characteristic, in each case, of an individual magnet does not yet become effective, but, rather, the individual magnetic elements act as an elongated magnet. Acceleration and braking losses resulting from a non-uniform magnet characteristic are therefore reliably prevented.

The invention can be employed particularly advantageously for high efficiency energy decoupling in motor/generator systems. Compared with the known systems, 90 % of the power transmission losses can be saved without any problem, as a result of which completely new fields of application are made possible.

Preferably, the spirals of bodies adjacent to one another are oriented in opposing directions, resulting in the cylinders rotating in opposite directions. It is, of course, also possible to use spirals running in the same direction, in which case the cylinders rotate in the same direction. It is particularly advantageous that an arbitrary direction of rotation depending on the design of the driven spiral can be selected in a simple manner using one and the same drive spiral. Under non-vacuum conditions, the spiral running in the opposing direction exhibits losses which are somewhat further reduced, since' the air flow generated by the cylinders in the peripheral direction is in the same direction in the case of spirals running in the opposing direction in the region of proximity.

For low-loss transmission it is essential that the surface roughness of the bodies which approximate to ideal cylinders is kept as low as possible. By this means the entrainment effects for the surrounding air are kept low. It is obvious that even at somewhat reduced air pressure the losses caused by air entrainment are further reduced.

The design of the magnetic spirals according to the invention can be adapted to the requirements within wide limits. A pitch of, for example, about 15° with a double helix spiral results in a spacing between the individual magnetic spirals, each viewed in the axially parallel direction, such that the adjacent spirals do not influence one another, highly uniform gliding of the magnetic spirals of the adjacent bodies past one another is able to take place and, nevertheless - assuming magnets of a strength appropriate for the application - no slippage takes place.

It is possible to adapt the dimensions of the bodies according to the invention to the requirements within wide limits. If it is desired that the length of the bodies exceeds the diameter by a multiple, each body can optionally be supported by several support bearings.

The transmittable forces increase with increasing pitch angle, in which context, however, the losses would become unsatisfactorily high, even with very long cylinders, at a pitch angle of, for example, 60°. If desired, the play in power transmission can be reduced, despite a small pitch, by means of a multiple helix spiral, which is frequently also termed a multiple helix, a play-free position of the driven cylinder, that is to say a position which in free running resolves in a defined manner to precisely one position, also being possible in the extreme case.

It is also important that the same pitch angle is chosen for the magnetic spirals opposite one another.

The present invention relates also to a system provided with a power transmission device defined above, and a driver for driving the first body, a load connected to the second body, sensor means for detecting a torque of the power transmission device developped in use, a control unit connected to the sensor means and the driver for controlling the torque of the power transmission system.

In more general terms, the present invention also relates to a system comprising a magnetic power transmission device, having at least a first body rotatably mounted about a first axis of rotation and a second body rotatably mounted about a second axis of rotation, the first body being provided with at least a first magnetic spiral, the second body being provided with at least a second magnetic spiral, the first and second magnetic spirals facing another in order to exert a magnetic force to another, the system moreover including a driver for driving the first body, a load connected to the second body, sensor means for detecting a torque of the power transmission device developped in use, a control unit connected to the sensor means and the driver for controlling the torque of the power transmission system.

In such systems the control unit is, preferably, arranged for controlling the driver at a point of substantially maximum torque, seen in absolute terms.

Such systems may be provided with feedback means between the load and the driver for feeding back energy generated by the load to the driver.

Further advantages, details and characteristics of the invention become apparent from the following description of an illustrative embodiment with reference to the drawing.
Fig. 1 shows a perspective view, in diagrammatic form, of one illustrative embodiment of a magnetic power transmission device according to the invention;
Fig. 2 shows a schematic block diagram of an electronic circuit for controlling power transmission in the device according to figure 1;
Fig. 3 shows a diagram of torque versus position of the first magnetic spiral relative to the second magnetic spiral of the magnetic power transmission device according to figure 1.

A power transmission device according to the invention comprises two a first body 3 provided with at least one magnetic spiral 1 on its outside surface and a second body 4 provided with at least one magnetic spiral 2 on its inside surface. Both body 3 and body 4 are preferably constructed as cylinders. Body 4 surrounds body 3. Bodies 3 and 4 are rotable about an axis of rotation 5. Although the situation is shown that bodies 3 and 4 have the same axis of rotation they may have different axes of rotation.

One of the bodies, for example body 3, is intended as the drive cylinder and the other, for example body 4, is intended as the driven cylinder. Both bodies are mounted, at the ends in each case, in roller bearings which are not shown in detail here. The roller bearings used are, preferably, high grade components which are superior to the industry standard both in respect of the low degree of wear and in respect of bearing friction. The bodies 3 and 4 are made of a material which is comparatively dimensionally stable even when subjected to temperature fluctuations. In the case shown as an example these bodies are made of aluminium. However, in an alternative embodiment either one or both may be made of a magnetically conducting material which increases the system torque by a factor of several units.

Although the situation is shown that the magnetic spirals 1 and 2 extend from the outer surface of body 3 and the inner surface of bosy 4, respectively, in a practical embodiment the magnetic spirals 1 and 2 may be embedded in the respective bodies such that they are flush with the outer surface of body 3 and the inner surface of the body 4, respectively.

An air gap is provided between the bodies 3 and 4, the air gap at the same time serving for compensation of any deformations in the bodies 3 and 4 caused by the temperature. The air gap may e.g. be 0.2 mm in size. However, it is to be understood that other distances may be possible. The closer the magnetic spirals are to another, the higher the torque of the transmission system will be.

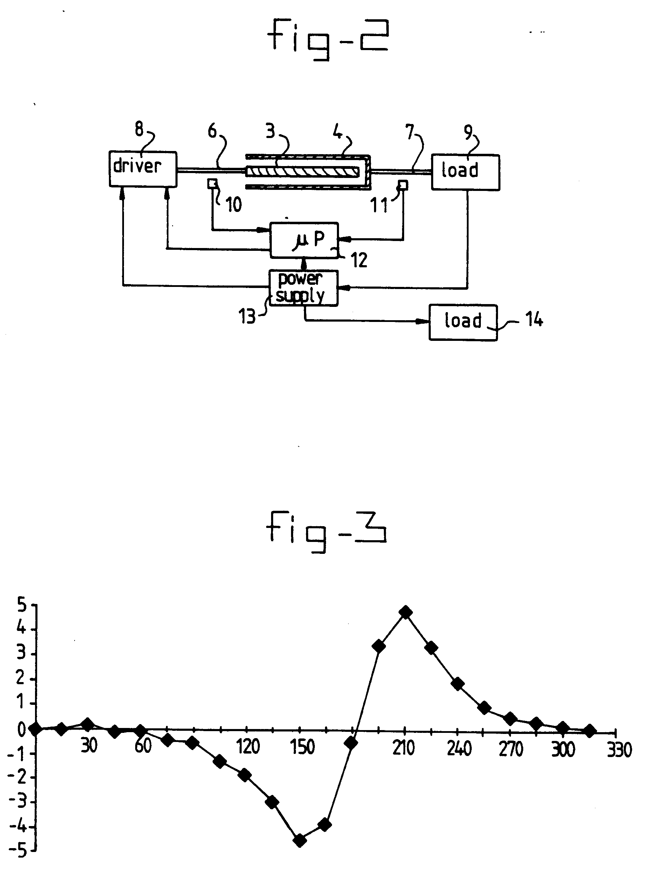

The magnetic spirals 1 and 2 may be oriented in opposing directions. Then, if the body 3 is driven clockwise at a drive shaft 6 (figure 2), the transmitted power can be tapped anti-clockwise at a driven shaft 7 (figure 2) at the body 4.

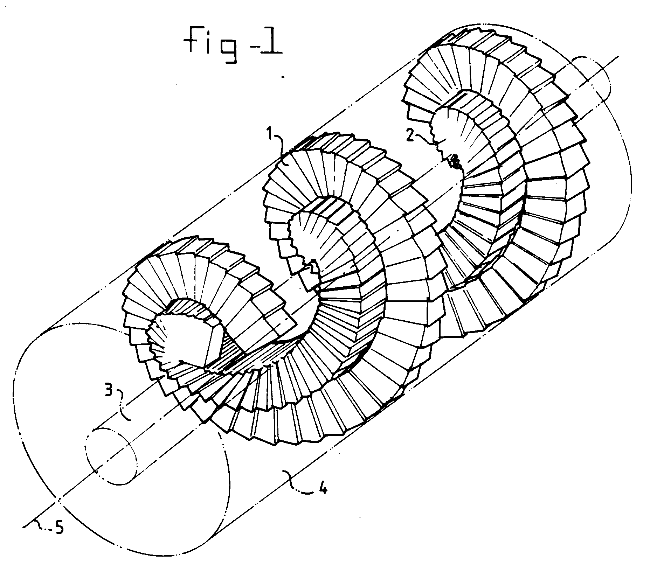

As can be seen from Fig. 1, the magnetic spirals 1 and 2 are closely alongside one another in operation. The magnetic spiral 1 of the drive body 3 in practice pushes the corresponding part of the magnetic spiral 2 of the driven body 4 in front of it, when identical magnetic poles are oriented towards one another, so that, to this extent, a repulsion effect is produced. The pushing takes place with extremely low losses, since the effect of individual magnets, from which the magnetic spirals 1 and 2 are preferably made up, is negligible. Instead of having magnetic spirals 1 and 2 facing another with magnetic poles of identical polarity, they may face another with magnetic poles of opposite polarity. Then, a pulling effect is obtained between bodies 3 and 4.

The magnetic spirals 1 and 2 are, preferably, covered by a coating of a non-magnetic material which offers low friction to air. For example, a polished ceramic, plastic or titanium coating can be used, a thickness of 0.2 mm being completely adequate. Other thicknesses are possible.

The radial spacing of the magnetic spirals 1 and 2 in the region of proximity is thus very small, for example about 0.6 mm.

The magnetic spirals 1 and 2 may be provided as single helix spirals. Since small concentrated magnetic elements are used, the effective range of the magnetic spirals 1 and 2 is considerably smaller than the pitch, that is to say the gap between adjacent turns of the magnetic spirals 1, 2 viewed in the axial direction. This gives rise to a corresponding play, which is advantageous according to the invention. Nevertheless, irrespective of the position in which the drive body is located with respect to the driven body, there is no knocking during start-up since the adjacent magnetic spirals act like a spring with progressive characteristic in respect of their power transmission action. Instead of single helix spirals 1 and 2, multiple helix spirals may be used.

In the block diagram according to Figure 2, the magnetic power transmission device according to Figure 1 has been schematically shown: only the bodies 3 and 4 are depicted. Body 3 is connected to a driving shaft 6 which is driven by a driver 8.

Body 4 is connected to a driven shaft 7 which is connected to a load 9. The load 9 may be any type of load, e.g., an other mechanical driven device. However, in the embodiment shown, the load 9 is a converter, converting the mechanical input power delivered by body 4 into an electrical output power. The electrical output power may be stored in suitable accumulators (now shown) or may be fed back to a power supply 13 connected to the load 9.

The power supply 13 is also connected to the driver 8 for supplying the latter with energy to drive the body 3. The driver 8 may be any driver suitable to convert electrical energy supplied by the power supply to mechanical energy for the body 3. However, a direct mechanical connection between the power supply 13 and the driver 8 may be used instead. The power supply may, e.g. receive its power from a water or wind driven mill. Similarly, the feedback of energy supplied by the load 9 to the power supply 13 need not be electrical; it may, for instance, be mechanical.

As shown in Figure 2, the power supply 13 may also be connected to a further load 14 for supplying energy to the latter.

Preferably, as shown in Figure 2, the driver 8 is arranged for converting electrical power into mechanical power and is controlled by a microprocessor 12 connected to the driver 8. The microprocessor 12 may be connected to the power supply 13 for receiving electrical power.

The system according to Figure 2 is also provided with two sensors 10 and 11. Sensor 10 is located adjacent the driving shaft 6 whereas the sensor 11 is located adjacent the driven shaft 7. The sensors 10 and 11 are arranged for detecting the relative rotation positions of the bodies 3 and 4 with respect to another. This is important, since the torque of the transmission system shown in Figure 1 depends on the relative rotation position between the bodies 3 and 4, i.e. between the magnetic spirals 1 and 2. As shown in Figure 3, which shows the system torque versus rotational position of the magnetic spiral 1 relative to the magnetic spiral 2 over 360° of rotation, there are two relative positions of maximum torque, seen in absolute terms. The microprocessor 12 is, preferably, arranged to control the driving of the driving body 3 such that the bodies 3 and 4, i.e. the magnetic spirals 1 and 2, are kept in a position of substantially maximum torque.

The actual peak torque that may be achieved depends, a.o., on the materials used for the system. As stated before, if the bodies 3 and 4 are made of a magnetically conductive material, the peak torque may be increased. Moreover, the actual peak torque depends on the construction of the system, i.e., including the number of magnetic spirals used on the outer surface of body 3 and the inner surface of body 4, respectively, the distance between the bodies 3 and 4, the actual shape of the bodies 3 and 4, whether magnetic spirals 1 and 2 are facing one another with equal or opposite magnetic poles, etc.

It is to be understood that the system shown in figure 2 is also applicable to a magnetic power transmission system according to the prior art, e.g., as disclosed by FR-A 1 589 173 and EP-A-0.681.757 in which two or even more bodies with magnetic spirals are arranged adjacent another, i.e., magnetic power transmission devices not being provided with one body surrounding another body.

## Claims

1. Magnetic power transmission device, having at least a first body (3) rotatably mounted about a first axis of rotation (5) and a second body (4) rotatably mounted about a second axis of rotation (5), said first body (3) having an outer surface and being provided with at least a first magnetic spiral (1) with magnetic poles oriented outwards from said outer surface and said second body (4) being provided with at least a second magnetic spiral (2), said first and second magnetic spirals facing another in order to exert a magnetic force to another characterised in that, said second body (4) is provided with a cavity defining an inner surface of said second body (4), said first body (3) being, at least partly, arranged within said cavity, magnetic poles of said second magnetic spiral (2) being oriented inwards from said inner surface of said second body (4) into the cavity.

2. Power transmission device according to Claim 1, characterised in that the outer surface of said first body (3) is essentially cylindrically shaped.

3. Power transmission device according to Claim 1 or 2, characterised in that the inner surface of said second body (4) is essentially cylindrically shaped.

4. Power transmission device according to one of the preceding claims, characterised in that the first axis of rotation coincides with said second axis of rotation.

5. Power transmission device according to one of the preceding claims, characterised in that said first body (3) is made of magnetically conducting material.

6. Power transmission device according to one of the preceding claims, characterised in that said second body (4) is made of magnetically conducting material.

7. Power transmission device according to one of the preceding claims, characterised in that the first and second magnetic spirals consist of highly efficient magnetic elements arranged in a row.

8. Power transmission device according to one of the preceding claims, characterised in that the first and second magnetic spirals, viewed in the axially parallel direction, have a spacing (pitch) which is a multiple of, preferably 2 to 30 times, the width of the magnetic elements.

9. Power transmission device according to one of the preceding claims, characterised in that the first and second magnetic spirals are arranged in opposing directions to one another and the direction of rotation of the first and second bodies is opposed.

10. Power transmission device according to one of Claims 1 to 8, characterised in that the first and second magnetic spirals are arranged in the same direction with respect to one another and the direction of rotation of the first and second bodies is the same with respect to one another.

11. Power transmission device according to one of the preceding claims, characterised in that the pitch angle of the spirals is 2° to about 60°, preferably 5° to 30°, and in particular about 15°.

12. Power transmission device according to one of the preceding claims, characterised in that 1 to 30 magnetic spirals, in particular 2 magnetic spirals, are formed on either of said first and second bodies.

13. Power transmission device according to one of the preceding claims, characterised in that the magnetic spirals are surrounded by a coating of non-magnetic material which in particular consists of titanium, noble metal, plastic or ceramic and in particular has a thickness of less than 0.2 mm.

14. Power transmission device according to claim 2, characterised in that a spacing (air gap) is provided between the cylindrical first body (3) and the second body (4) of, in particular, less than 1/100, preferably about 1/1000, of the first bodies diameter, or less.

15. Power transmission device according to claim 2 or 14, characterised in that the first and second bodies have an unsupported length of about 1 to 50 times, preferably about twice, the diameter of the first body (3).

16. Power transmission device according to one of the preceding claims, characterised in that the magnetic spirals have the same pitch angle.

17. Power transmission device according to one of the preceding claims, characterised in that the first magnetic spiral (1) and second magnetic spiral (2) are facing one another with magnetic poles of equal polarity.

18. Power transmission device according to one of the preceding claims, characterised in that the first body (3) is provided with at least one more magnetic spiral.

19. Power transmission device according to one of the preceding claims, characterised in that the second body (4) is provided with at least one more magnetic spiral.

20. System provided with a power transmission device according to one of the preceding claims, characterised by a driver (8) for driving said first body (3), a load (9) connected to said second body (4), sensor means (10, 11) for detecting a torque of the power transmission device developped in use, a control unit (12) connected to said sensor means and said driver for controlling the torque of the power transmission system.

21. System comprising a magnetic power transmission device, having at least a first body (3) rotatably mounted about a first axis of rotation (5) and a second body (4) rotatably mounted about a second axis of rotation (5), said first body (3) being provided with at least a first magnetic spiral (1), said second body being provided with at least a second magnetic spiral (2), said first and second magnetic spirals facing another in order to exert a magnetic force to another, the system moreover including a driver (8) for driving said first body (3), a load (9) connected to said second body (4), sensor means (10, 11) for detecting a torque of the power transmission device developped in use, a control unit (12) connected to said sensor means and said driver for controlling the torque of the power transmission system.

22. System according to claim 20 or 21, wherein the control unit (12) is arranged for controlling said driver (8) at a point of substantially maximum torque, seen in absolute terms.

23. System according to claim 20, 21 or 22 provided with feedback means between said load (9) and said driver (8) for feeding back energy generated by said load to said driver (8).
